# EUROPEAN PATENT SPECIFICATION

(11) **EP 3 655 782 B1**
(45) Date of publication and mention of the grant of the patent: **18.12.2024**
(21) Application number: 18749079.2
(22) Date of filing: 20.07.2018
(51) Int. Cl.: G01N 35/00, G01N 27/74, G01N 21/07, B01L 3/00, B03C 1/033, B03C 1/28

(54) **APPARATUS FOR CONDUCTING AN ASSAY, USE AND METHOD**
VORRICHTUNG ZUR DURCHFÜHRUNG EINES TESTS,VERWENDUNG UND VERFAHREN
APPAREIL PERMETTANT LA RÉALISATION D'UNE ANALYSE, UTILISATION ET PROCÉDÉ

(30) Priority: 21.07.2017 GB 201711804
(43) Date of publication of application: 27.05.2020
(73) Proprietor: Mast Group Limited, Liverpool, Merseyside L20 1EA (GB)
(72) Inventor: WONG, Ken Jin, Liverpool, Merseyside L20 1EA (GB); WILLIAMS, David Hugh, Liverpool, Merseyside L20 1EA (GB)
(74) Representative: Forrest, Stuart
(86) International application number: PCT/GB2018/052054
(87) International publication number: WO 2019/016562

(56) References cited:
- WO-A1-2016/087397
- WO-A1-2017/019625
- WO-A1-2017/085472
- US-A1- 2012 295 366
- US-A1- 2016 195 523
- US-A1- 2016 263 574

## Description

The present invention relates to an apparatus for conducting an assay, and particularly to an apparatus which is capable of controlling the movement of magnetic beads through microfluidic chambers and/or channels in so called "lab-on-a-disc" systems.

"Lab-on-a-disc" or "lab-on-a-CD" systems use generally disc-shaped reaction vessels, although other geometries may be used, containing passages, cavities and other features such as valves and zones of altered hydrophobicity. They are particularly useful for carrying out biological assays involving microfluidic transfers and reactions within the discs. The assay discs are used with apparatus which effects rotational movement to control the flow of reaction fluids using centrifugal forces.

Microfluidic systems are of increasing importance in the field of medicinal and molecular diagnostics applications, and are of particular interest due to their high surface/volume ratios, short diffusion parts and minimal reagent volumes, leading to microfluidic systems being of particular interest for time critical applications and field diagnostics. In many applications, there is a need to separate and/or move components through micro-chambers and/or micro-channels in order to carry out diagnostic tests. In particular, there may be a need to separate and/or move target liquid and/or particulate solid-phase biomaterials of a biological sample through a microfluidic system.

Some known apparatuses for carrying out assays in microfluidic system, such as assay discs and the like, comprise means for transporting components between microfluidic chambers and/or channels by the use of magnetic beads housed within the micro-chambers and/or channels. Movement of such magnetic beads may be controlled by a combination of externally mounted magnets and/or spinning the assay disc housing the microfluidic system, in order to move the beads by centrifugal force.

Magnetic beads may be used to transport, mix, separate, and/or concentrate biological molecules and/or cells, for example, DNA, antibodies or bacteria, by forming interactions with desired biological components.

US2013/0206701 discloses a system which utilises a stationary magnet to attract beads towards the centre of an assay disc and spinning of the assay disc to create a centrifugal force to move the beads towards the outer edge of the disc. Alternative disclosures include US 2008/0073546 which utilises a similar system for counterbalancing centrifugal and magnetic forces using either stationary magnets or magnets which may be moved across the radius of an assay disc while spinning. US 2008/0035579 and US 2008/0056949 also disclose the use of counterbalanced centrifugal forces and magnetic forces to manipulate movement of magnetic beads through a microfluidic system, with the magnet's position limited along a guide rail.

WO2017019625A1 discloses methods and devices for the automated processing of biological samples through multiple sample preparation and assay steps.

WO2017085472A1 discloses an apparatus for conducting an assay, wherein the apparatus comprises a turntable for receiving an assay disc and to control an assay on the assay disc by rotational movement of the turntable, wherein the turntable comprises: one or more heater modules to apply heat to one or more specific parts of the assay disc during rotation; a heater controller to select a required heater and to control the temperature thereof, and an IR transceiver to allow instructions and/or heating parameters to be transferred to the heater controller wirelessly.

US2012295366A1 discloses a device for contactless control of magnetic beads on a microfluidic card by means of external magnetic fields.

Other systems may use two fixed magnets at different radial distances, the first magnet attracting the beads towards the centre of the disc, the second magnet attracting the beads towards the circumference of the disc.

In each of these systems, precise control of the movement of magnetic beads is hindered due to the need to balance opposing forces. It is also the case that magnets may be unable to collect beads that are at the innermost and outermost areas of the fluid chambers. Furthermore, time delays may occur while the disc accelerates to the speed required to move the beads using centrifugal forces and, where chambers are housed at similar or identical distances from the centre of the assay disc, similar or identical centrifugal forces may be felt, making it difficult to direct the desired movement of the magnetic beads.

In such systems, the positioning of the interconnecting channels and/or chambers may be dictated by the positions of the fixed magnet or magnets. These design constraints may limit the utility and/or optimisation of the system.

The present inventors have recognised shortcomings with known apparatuses and have developed a new system which allows more controlled assay disc procedures and brings further advantages.

### SUMMARY OF THE INVENTION

According to a first aspect, the present invention provides an apparatus according to claim 1 for conducting
an assay in a microfluidic system comprising magnetic beads, said apparatus comprising:
a platform upon which a microfluidic system can be mounted, one or more actuators; wherein the one or more actuators comprise a magnet mounted directly thereupon, or mounted on a spring, a spring assembly or an adjustable mounting assembly; wherein the one or more actuators comprises at least one rotary actuator, wherein the at least one rotary actuator is configured to enable arcuate movement of the magnet in an X and Y axis of an x-y plane, which is the high surface area plane of the mounted microfluidic system, wherein said one or more actuators is
configured to directly influence movement of magnetic beads housed within the
   microfluidic system when said microfluidic system is mounted on said platform,
and a control means configured to control the relative movement of the one or more actuators,
and the microfluidic system when mounted, to enable the magnet to trace a desired path across the mounted microfluidic system, said magnet being positionable at any x- and y-coordinates of the mounted microfluidic system, wherein said apparatus
further comprises: means for moving the mounted microfluidic system in a stepwise fashion.

Such an apparatus may be utilised with mounted microfluidic systems, and may be able to collect and transport beads from any position within a microfluidic system, including from the innermost and outermost regions of the chambers, channels and or mounted system. Accordingly, microfluidic chambers and/or channels may be optimally positioned with regards to the assay testing required, and without mind to the position of any fixed magnets and or centrifugal forces.

Such a system may also provide timely movement of magnetic beads.

According to a second aspect, the present invention provides an assay unit according to claim 11 comprising an apparatus according to the first aspect of the invention, which further comprises means for heating and/or cooling the ambient temperature of the chamber within which the assay disc is located during the assay, and optionally wherein said means is a fan heater or a cooler.

According to a third aspect, the present invention provides the combination of an apparatus according to the first aspect of the present invention, or an assay unit according to the second aspect of the invention and a microfluidic system configured to be mounted on the apparatus, see claim 12.

According to a fourth aspect of the present invention there is provided the use of an apparatus according to any of the first, second or third aspect of the present invention, see claim 13.

According to a fifth aspect of the present invention there is provided a method for carrying out an assay comprising the steps of: i) mounting an assay disc comprising a microfluidic system on a turntable, wherein said microfluidic system comprises a plurality of magnetic beads; and ii) providing a magnet on an actuator such that the magnet made be positioned at any x- and y-coordinates of an x-y plane, which is the high surface area plane of the microfluidic system of the mounted assay disc, further comprising the step of moving a plurality of magnetic beads through a portion of the microfluidic system by moving said magnet whilst rotating said assay disc such that said magnet traces a desired locus in the x-y-plane of the assay disc, see claim 14.

### DETAILED DESCRIPTION

An embodiment of the present invention provides an apparatus for conducting an assay in a microfluidic system comprising magnetic beads, said apparatus comprising: a platform upon which a microfluidic system can be mounted, one or more actuators having a magnet, configured to directly influence movement of magnetic beads housed within a microfluidic system when said microfluidic system is mounted on said platform, and a control means configured to control the relative movement of the one or more magnets, and a microfluidic system when mounted, to enable the magnet to trace a desired path across a mounted microfluidic system, said magnet being positionable at any x- and y-coordinates of a mounted microfluidic system, wherein said apparatus further comprises: a) at least one rotary actuator configured to enable magnet movement in an x-axis, and/or b) a means for moving a mounted microfluidic system in a stepwise fashion.

A rotary actuator may result in arcuate magnet movement. It shall be understood that arcuate motion, unlike linear motion, necessarily comprises vector components in at least two axes. However, it shall be understood that the arcuate motion in along a particular axis, such as the x-axis, relates to the vector component of the arcuate motion along this axis. Accordingly, arcuate magnet motion along an x-axis requires that there be some movement of the magnet along the x-axis, but does not prevent there being additional magnet movement along a y-axis, or any other axis.

A rotary actuator may comprise a rotary actuator having an arc of large radius, wherein a magnet may be mounted upon such a rotary actuator and traverse a path in the x-y plane across a surface of a mounted microfluidic system. Preferably, the magnet may be mounted upon a rotary actuator and traverse a path in the x-y plane between the outermost edge of a mounted microfluidic system and a central point thereof. Alternatively, and/or in addition, a rotary actuator may be configured to move the magnet along a z-axis away from and towards the surface of a mounted microfluidic system.

The apparatus may be configured to hold a mounted microfluidic system in a fixed position, with magnet movable in at least two axes. Magnet movement in the x-axis is achieved by the use of one or more rotary actuators. Optionally, one or more linear or rotary actuators may additionally be used. In some options, magnet movement may additionally occur in the y-axis.

Alternatively, the apparatus may be configured to enable a mounted microfluidic system to move in or about at least one axis in a stepwise fashion, with the magnet moveable in at least one alternate axis.

According to some embodiments, when the apparatus comprises a means for moving a mounted microfluidic system, the system may be rotatable.

It shall be understood that stepwise motion relates to motion which is discontinuous, i.e. periods of motion separated by pauses or changes in the direction of motion.

According to some embodiments, the stepwise motion of a mounted microfluidic system may be achieved by non-continuous rotation. Optionally, the stepwise motion may be rotation about an axis in one direction, followed by rotation about the same axis in the alternate direction. Preferably each period of rotation in a single direction is less than 360 degrees of rotation. Optionally, each period of rotation may be from zero to 180 degrees, zero to 90 degrees, or zero to 30 degrees.

Alternative the stepwise non-continuous rotation may comprise rotation about an axis in a single direction, wherein the rotation is intermittently interrupted by pauses in rotation. Each period of rotation separated by a pause in rotation may be from zero to 360 degrees. Optionally, each period of rotation may be from zero to 180 degrees, zero to 90 degrees, or zero to 30 degrees.

Stepwise motion may also include discontinuous linear motion in one or more axes. Optionally, stepwise linear motion may include a period of motion along one axis followed by a period of motion along a second axis. Preferably said axes may be substantially perpendicular to each other.

It shall be appreciated that the terms x-axis, y-axis and z-axis relate to the axis of a microfluidic system when mounted on the apparatus of the present invention. Such microfluidic systems will have a high surface area plane, such as the flat surface of a microfluidic disc, which will be understood to be the x-y plane. The z-axis extends in a perpendicular direction to the x-y plane, i.e. the high surface area plane of microfluidic system when mounted.

For systems with four-fold rotational symmetry, the x-axis and y-axis may be used interchangeably. For disc shaped systems, the x-axis may be understood as extending along any axis corresponding to a radius of the microfluidic disc when mounted.

The present invention may be used with a microfluidic system of any shape. Preferably the microfluidic system will be predominantly flat. Suitable systems may be square, rectangular or disc shaped. Preferably, systems may be disc shaped.

Optionally, the apparatus may be configured to rotate a mounted microfluidic system, such as a microfluidic disc, about an axis. Where the apparatus is configured to rotate a mounted microfluidic disc about an axis, the magnet may be movable along, or predominantly along an axis corresponding with a radius of the microfluidic disc when mounted.

Optionally, when the apparatus comprises a means for moving a mounted microfluidic system in a stepwise fashion, the magnet may be mounted on a rotary actuator. Alternatively, or in addition, the magnet may be mounted on a linear actuator. Where a magnet is mounted on a rotary actuator, the resultant magnet motion may be arcuate.

According to some embodiments, the actuator may comprise a linear actuator. Such an actuator may be suitable for moving the magnet in any axis. Preferably, a linear actuator may be configured to move the magnet along an x-axis of a planar surface of a mounted microfluidic system, such as along the radius of a microfluidic assay disc.

Thus, controlled movement of magnetic beads housed within a mounted microfluidic system may be achieved by; movement of one or more magnets in one or more axes, accompanied by precise stepwise rotation of a mounted assay disc through an angle of less than 360 degrees, by the controlled stepwise movement of a mounted microfluidic system along one or more axes relative to the magnet, or by the use of a magnet mounted on a rotary actuator, in combination with a further linear or rotatory actuator and a fixed microfluidic system. Accordingly, the magnet may be positionable at any desired x- and y- coordinate of a mounted microfluidic system.

The present invention allows for more specific control of the movement of magnetic beads, and any liquid and/or particulate solids associated therewith, through the microfluidic channels and chambers of a mounted microfluidic system compared to previous systems which utilise centrifugal forces resultant from the spinning of a mounted microfluidic assay disc. Furthermore, the control means of the present invention enables the magnet to trace any desired path across a mounted fluidic system, which may not be achievable by systems which are spinning in order to produce and/or maintain a centrifugal force.

In some embodiments the apparatus may comprise a rotary actuator and a linear actuator mounted on a single drive shaft. Optionally, the linear actuator may control the x-position of the magnet relative to a mounted microfluidic system and the rotatory actuator may control the z-position of the magnet relative to a mounted microfluidic system.

By controlling the z-axis position of the magnet relative to a mounted microfluidic system, the position of the magnet may be optimised for each mounted microfluidic system, so as to be close enough to provide a strong interaction with any magnetic beads, while enabling the disc to rotate without the supporting platform interfering with the magnet and inhibiting apparatus and/or microfluidic system movement.

It shall be understood that the apparatus may optionally comprise multiple magnets. Where multiple magnets are used, each magnet may be housed on a separate actuator.

According to some embodiments, the one or more actuators may be configured to position the one or more magnets above the surface of a mounted microfluidic system. Alternatively, the one or more actuators may be configured to position the one or more magnets below the surface of a mounted microfluidic system.

Optionally, where a magnet is located above a mounted microfluidic system, the magnet may rest upon the surface of the microfluidic system under its own weight, with its own weight providing sufficient force to keep magnet in contact with the surface.

Alternatively, the one or more actuators may be configured to position the one or more magnets at a fixed distance from the surface of a mounted microfluidic system.

Where the magnet is located below a mounted microfluidic system, an upward force may be applied to the magnet to keep the magnet in contact with the bottom of the mounted fluidic system, or to constrain the magnet to be held at a fixed distance away from the lower surface of the mounted microfluidic system.

Where the apparatus comprises two or more magnets, these may be independently positioned above or below the microfluidic system.

According to some embodiments, the apparatus may comprise a means to move a magnet clear of the microfluidic device. Optionally, this may be achieved by rotation of the driveshaft about a z-axis.

In some embodiments, the one or more magnets may be mounted on a spring assembly configured to enable the one or more magnets to be capable of being brought into contact with the surface of a mounted microfluidic system. Optionally, the one or more magnets may be mounted on a leaf spring assembly.

Where additional clearance is required, for example, to allow a microfluidic system mounted on the apparatus to rotate without the supporting platform interfering with the magnet, the magnet may be mounted on an actuator suitable for moving the magnet in an x-axis, such as a linear actuator, wherein this actuator may be rotated away from and/or towards the mounted microfluidic device. Rotating the actuator rod in one direction will move the magnet clear of any obstruction while rotation in the other direction will enable the magnet to contact the disc. Optionally, the magnet may be mounted on a spring, such as a leaf spring, and a small additional rotation may flex the spring to provide the required upward pressure.

According to some embodiments, the one or more magnets may be mounted on an adjustable mounting assembly. Optionally, the adjustable mounting assembly includes at least one adjustable magnet holder and at least one through plate. The one or more magnets may be positioned within a holding portion of each one the adjustable magnet holders. In some embodiments, the one or more magnets are held in the holding portion, in a position above and/or below a microfluidic system mounted on the apparatus.

Optionally the through plate may be located on a portion of one of the rotary actuators. In one embodiment, the through plate may be located on a portion of one of the linear actuators. In a further embodiment, the through plate is located on a portion of the rotary and/or linear actuator. The through plate may be located on a driveshaft of the rotary and/or linear actuators.

In some embodiments, the through plate comprises a first engagement portion. In some embodiments, the adjustable magnet holder has a second engagement portion. The second engagement portion may be configured to engage with the first engagement portion of the through plate. For example the first engagement portion of the through plate may include a threaded portion, preferably a threaded through hole and the second engagement portion of the adjustable magnet holder includes a threaded portion that corresponds to the threading of the first engagement portion.

Thus, in some embodiments, the adjustable mounting assembly is configured to allow positioning of the magnet in a position along a Z-axis. This may be achieved by actuating the adjustable magnet holder, for example by clockwise or anticlockwise rotation of the adjustable magnet holder relative to the through plate, which can lead to the position of the magnet being altered by the threaded portion of the adjustable magnet holder travelling up or down along the correspondingly threaded portion of the through plate.

In certain embodiments, mounting the one or more magnets on an adjustable mounting assembly allows for fine tuning of the position of the one or more magnets in a z-axis in relation to a microfluidic system mounted on the apparatus. Thus allowing for a wider range of different microfluidic systems to be mounted and used with embodiments described herein.

According to some embodiments, the platform may comprise a turntable configured to receive and controllably rotate an assay disc comprising a microfluidic system. In particular, the turntable may be configured to be capable of controllably rotating a mounted assay disc through partial revolutions. Optionally, the turntable may be configured to be capable of rotating a mounted assay disc in both clockwise and anticlockwise directions. Thus, the apparatus may be capable of controllably rotating a mounted assay disc through a sequence of partial revolutions in a clockwise and/or anticlockwise direction. The apparatus may comprise a controller configured to control the one or more actuators and the turntable to enable the magnet to trace a desired path across a mounted microfluidic system. Optionally, the rotation of a microfluidic system and the movement of one or more actuators, upon which one or more magnets are mounted, may be simultaneously controlled.

The apparatus of the present invention may be suitable for use with an assay disc comprising one or more microfluidic chambers and one or more microfluidic channels. The microfluidic channels may be of any suitable orientation, geometry, and length. The microfluidic channels may comprise linear and/or arcuate sections, and may optionally comprise acute, obtuse, reflex or right-angled turns. Accordingly, the apparatus of the present invention enables the movement of magnetic beads through a path of any desired geometry, and is not limited to geometries which may be traversed by counterbalancing magnetic and centrifugal forces.

In some embodiments, the turntable may comprise one or more heater modules. Such heater modules may be configured to apply heat to one or more specific parts of a mounted microfluidic system. Preferably, the one or more heaters may be configured to apply heat to one or more specific parts of a mounted microfluidic system during rotation.

Optionally, the controller may be configured to control the heater modules. The control may be specific not only in terms of location to which the heat is applied, by conduction, but also in terms of the ramp up/ramp down time, i.e. the rate of change of temperature of reaction medium at a particular location on the disc.

The apparatus of the present invention can be configured so as to carry out isothermal assays (e.g. where the heater element is positioned substantially continuously across the whole area of the assay so that all of the assay is carried out at substantially the same temperature, or alternatively where no heat is applied). However, the apparatus of the present invention is perhaps even more useful when configured to carry out non-isothermal assays, i.e. where different parts of the assay disc, and therefore different parts of the reaction medium, are, or can be, subjected to different temperatures. The combination of targeted collection and transportation of magnetic beads, along with any liquid and/or particles associated therewith, and specific heating allows effective and tailorable operation.

Targeted heating of specific areas of a microfluidic system, accompanied by controlled transport of magnetic beads may also enable specific heating profiles to be achieved.

Unlike some prior art devices comprising heating elements within the assay discs, the heat comes from the turntable. Low amounts of power are required because the heat is specifically applied by conduction to specific parts of the assay disc, and the temperature can be adjusted quickly which can bring efficiencies not only in terms of the assay duration but also in terms of the amount of time it is necessary to use the heating elements.

Means may be provided to facilitate the correct positioning of the assay disc relative to the turntable. For example, the turntable may comprise a central spindle corresponding to a spindle hole in the assay disc. A longitudinal groove on the spindle and a corresponding longitudinal projection on the hub of the assay disc enable the angular position of the assay disc to be fixed relative to the turntable. Guiding means may be provided to guide the assay disc to the correct angular position. For example, the horizontal dimension of the groove of the spindle and the horizontal dimension of the complementary projection on the disc may decrease in a longitudinally downward direction: this means that when the disc is just above the turntable there is some tolerance in the angular positioning of the assay disc relative to the turntable, this tolerance decreases as the assay disc is lowered to the turntable.

Further means may be provided to locate the assay disc relative to the turntable. For example, a locating projection (e.g. a pin or boss) and corresponding locating recess (e.g. a hole or cut away portion) may be provided on the turntable and assay disc respectively, or vice versa. These locating features may be located at or near the periphery of the assay disc.

Thus, there may be two or more means of locating the angular position of the assay disc relative to the turntable. For example, the central spindle locating means may act as a stationary locator and guide means, and the projection and recess features at or near the periphery of the assay disc may act as more precise locating means.

Clamping means may be provided to secure the assay disc to the turntable.

These clamping means may comprise a mechanical ball bearing clamping mechanism to hold the assay disc to the turntable, for example at the central hub.

Alternatively or additionally, the clamping means may comprise magnetic means for holding the assay disc in a fixed position relative to the turntable. A magnetic means may also be used to align and guide the disc to the correct position. Therefore, for example, a user may place the disc above the turntable and the apparatus will then automatically align the disc and securely hold it to the turntable in the correct position.

This may enable the assay disc to me mounted at a particular position, such that the relative positions of the microfluidic chambers and/or channels may be known. Consequently, it may be possible to precisely control the rotation of the disc from a known starting position in order to collect and transport magnetic beads through a desired portion of the microfluidic system.

The magnetic means may comprise disc magnets arranged in opposite pole directions in the turntable (for example in the hub of the turntable) and disc magnets arranged in opposite pole directions in the assay disc (for example in the hub of the assay disc).

Wireless power transfer means may be used to transfer power to heater elements in the turntable and/or to a heater controller. One possible power transfer mechanism may comprise disc coils arranged in a concentric manner. The apparatus may comprise a stationary disc coil and a rotational disc coil. For example, a stationary disc coil (which may be fixed below the turntable) may be energised to generate an alternating electromagnetic field that will then induce current on a rotational disc coil (which may be fixed to the turntable and above the stationary disc coil separated with a small gap).

The apparatus may also comprise an IR (infrared) transceiver for bi-directional communication. The IR bi-directional communication may be used to allow instructions and heating parameters to be transferred to a heater controller wirelessly and may also allow communication from the heater controller to the host by establishing handshake between the host and the heater controller. Each transceiver may optionally comprise one or more IR emitters and one IR receiver. Preferably, the IR transceiver may comprise, four IR emitters.

The four IR emitters may be arranged in equidistance surrounding the central hub of the turntable. The total field of emission from the four IR emitters allow the IR receiver at the opposite end to be able to receive the IR emitted signal across 360°, so that communication can be made regardless of the turntable position.

The present invention thus provides heat to the assay disc whilst it is spinning. This heating can be provided in a continuous manner and/or the heating can be tailored.

A known problem which may occur in assay discs concerns the condition of the liquid when it is being heated. Bubbles may appear and/or there may be expansion of the air and/or pressure difference between chambers may have undesirable consequences, e.g. causing back-flow of liquid. The distorted condition of the liquid can affect the assay e.g. by affecting optical readout. The present invention brings advantages in restoring the original state of the liquid in the reaction wells through centrifugal rotation whilst heating the liquid. Thus, the present invention avoids compromising the heating of the liquid, and consistent optical readout can be obtained.

The heater modules may for example be foil heaters.

The turntable may be mounted with one or more heater modules, optionally two or more heater modules. In some embodiments, the turntable may be mounted with 3 or more heater modules.

The apparatus comprises circuitry for controlling a number of heater modules that could be controlled independently to heat up to the target temperature. The heaters may consist of a thin aluminium plate for evenly distributed heating across specific region(s) of the assay discs. An RTD (resistance temperature detector) may be mounted on the thin aluminium plate to monitor the temperature of the aluminium plate. The RTD may be connected to the heater controller circuit to provide feedback to regulate the heater to achieve stable temperature over time.

The wireless functionality may be present in terms of the power generation in order to power the circuitry and the heaters, and wireless communication may also be used with 360° IR transceiver configuration. The wireless features allow the turntable to be spun freely, at the same time the power can be supplied to operate the heaters and the IR communications.

The heater modules may be configured to protrude from the surface of the turntable using light spring pressure so as to be in contact with the assay disc so that heat can be transferred effectively.

Optionally, insulators may be used beneath the heater modules to prevent heat loss downwards. As a result, they can improve the efficiency of heat transfer and the control of the heating rate.

In one embodiment there are two heater modules on the turntable: one may be used for heating up the sample in the sample chamber; and the other may be used for the reaction wells for an assay. Additional heater modules may be added for other heating requirements: for example, an additional heater could be used to assist fluid transfer by generating differential pressure that would allow the fluid to transfer from a heated area to a cold region.

In such cases, the heating of a region in a chamber or reaction well would increase the enclosed pressure which is caused by the expansion of the gas components. In order to stabilise the overall pressure inside the apparatus, the pressure must be released in some means either through a release to external atmosphere or by pushing any liquids in the next chamber(s) to equilibrate the pressure. Subsequent cooling of the chamber or well causes the contraction of the gas components and therefore reduces the internal pressure resulting in movement of liquid into the chamber or well.

A stationary coil assembly may contain a stationary coil attached to a ferrite sheet sandwiched between two holders which may conveniently be made of plastic. The same configuration may be used for a rotational coil assembly. The stationary and rotational coil configurations may be used to provide the power to the heaters. The generated power (e.g. 5 Watts and above) could be customised according to the application needs by changing the configurations of the stationary and rotational coils, and/or the signal frequency supplied to the stationary coil. For example, the power generated and delivered to the heater and controller could be adjusted to between 5 Watts and 7 Watts by adjusting the frequency of signals supplied to stationary coil. The power may be used to drive the heaters and the associated circuitry including the IR transceiver and the heater controller. In a further example, the power may be configured to be distributed between heaters, e.g. to a 4 Watt heater and a 2 Watt heater operating at the same time.

The whole turntable assembly may be attached to the spindle of a motor to establish the rotational movement on the turntable for controlling the movement of the fluid, in this example, a BLDC (Brushless DC) motor may be used. The motor may be mounted on a metal base (motor mount) which is fixed to the chassis. On top of the motor mount, the stationary IR (infrared) transceiver board may be mounted and followed by the stationary coil. Both components may be mounted so that they are held stationary. Above the stationary coil are the rotational coil and the circuit board for the rotational IR transceiver and heater controller. They may be mounted to the turntable. They could be spun along with the turntable without interrupting the power supply and IR communication between the host and heater controller.

According to some embodiments, the present invention provides an assay unit comprising an apparatus according to the first aspect of the present invention.

The assay unit may provide a chamber in which the apparatus according to the first aspect of the present invention may reside. The assay unit may be provided with a means for controlling one or more aspects of the environment within the chamber. Aspects that may be controlled include, but are not limited to, temperature regulation, humidity regulation, atmospheric pressure, composition, such as oxygen level regulation and the like. Optionally, the chamber may be provided with a means for temperature regulation.

In some embodiments, the assay unit may comprise a means for heating and/or cooling the ambient temperature of the chamber within which the assay disc is located during the assay. Thus, whereas the stationary heating system provides localised heating from the turntable, an optional rotational heating system allows the temperature of the environment around the assay disc (and, consequently, the assay disc and its contents) to be altered. Optionally a fan heater or cooler may be used. For example, an air blower, using a fan, may be used.

According to some embodiments, the present invention provides the combination of an apparatus according to the first aspect of the present invention, or an assay unit according to the second aspect of the present invention, and a microfluidic system configured to be used with such an apparatus or assay unit.

The microfluidic system may be an assay disc, and may be mounted on the platform of the present apparatus, such as a turntable. Suitable assay discs, may comprise microfluidic channels and or microfluidic chambers. Magnetic beads may be housed in one or more of the microfluidic chambers and/or channels.

According to some embodiments of the present invention, there is provided the use of apparatus according to the first aspect of the present invention.

In use, a microfluidic system may be mounted on an apparatus according to the present invention. Such microfluidic systems might be incorporated in an assay disc, a rectangular block, or any other suitable format. The microfluidic system may comprise microfluidic channels and/or chambers, one or more of which may house a plurality of magnetic beads.

In disc-based systems, use of the apparatus may include one or more magnets being moved substantially radially using a linear actuator mechanism or a rotary actuator having an arc of large radius, the centre of which is on a line at right angles to the midpoint of the line between the innermost and outermost positions of the magnet. Movement concentric to the circumference is implemented by controlled rotation of the disc about its axis. By combining the two motion components, the effective path of the magnet can trace any desired locus.

Alternatively, for disc or non-disc -shaped systems, the effective motion can be achieved by arcuate movement of the magnet, optionally in addition to further linear or rotary movement of the magnet along an alternate axis whilst the microfluidic system is held in a fixed position. In another option a disc or non-disc -shaped system may be moved in a step-wise fashion accompanied by linear and/or rotary movement of one or more magnets in another direction, preferably the magnet movement may be predominantly at right angles to the system movement.

Thus, for systems of the present invention, the x and y coordinates of the magnet may be varied continuously with respect to the microfluidic system.

The magnet may be moved to any position within the parameters of the microfluidic channels and/or chambers in order to collect and/or transport magnetic beads. Controlled relative movement of the magnet relative to the microfluidic chambers and/or channels, enables transportation of the beads through the microfluidic system at any radial distance from the disc centre.

Use of the present invention may enable magnetic beads to be transported along concentric channels, channels of varying radial distance, channels of varying gradient within the microfluidic system, and through channels and/or chambers situated at any position in the microfluidic system.

Accordingly, use of the apparatus of the present invention enables optimised microfluidic system design, without the need to position its chambers and/or channels in close proximity to a fixed magnet or magnets. Similarly, the microfluidic flow path is not restricted to paths which may be easily traversed by magnetic beads directed by centrifugal forces, stationary magnets, or a combination of the two.

According to a fifth aspect of the present invention, there is provided a method for carrying out an assay comprising the steps of: i) mounting an apparatus comprising a microfluidic system on a turntable, wherein said microfluidic system comprises a plurality of magnetic beads; and ii) providing a magnet on an actuator such that the magnet may be positioned at any x-coordinates of the assay disc.

According to some embodiments, there is also provided a step of moving a plurality of magnetic beads through a portion of the microfluidic system by moving said magnet whilst rotating said assay disc such that said magnet traces a desired locus in x-, y-plane of the assay disc.

The present invention will now be described in further, non-limiting, detail, with reference to the following Figures in which:
Figure 1 shows a schematic representation of one example of an apparatus according to the present invention, with a microfluidic disc mounted thereupon, the apparatus comprising a magnet mounted on a linear actuator;
Figure 2 shows a schematic representation of an alternative example of an apparatus according to the present invention, with a microfluidic disc mounted thereupon, the apparatus comprising a magnet mounted on a rotary actuator;
Figure 3 shows a side view schematic representation of a mounted microfluidic disc mounted on apparatus according to the present invention, comprising a magnet mounted on linear actuator;
Figure 4 shows a side view schematic representation of a mounted microfluidic disc mounted on an apparatus according to the present invention, comprising a linear and rotatory actuator mounted on a single drive shaft;
Figure 5 shows a front view schematic representation of the apparatus of Figure 4;
Figure 6 shows one example of a turntable platter in accordance with the present invention;
Figure 7 shows how magnetic locating and clamping means may be used in the present invention;
Figure 8 shows a side view of a turntable in accordance with the present invention;
Figure 9 shows a perspective view of a turntable in accordance with the present invention;
Figure 10 shows, in exploded schematic view, some possible elements of a turntable power transfer assembly in accordance with the present invention; and
Figures 11 to 16 show some components of a turntable in accordance with the present invention.
Figures 17 and 18 show schematic views of an adjustable mounting assembly according to certain embodiments of the present invention.

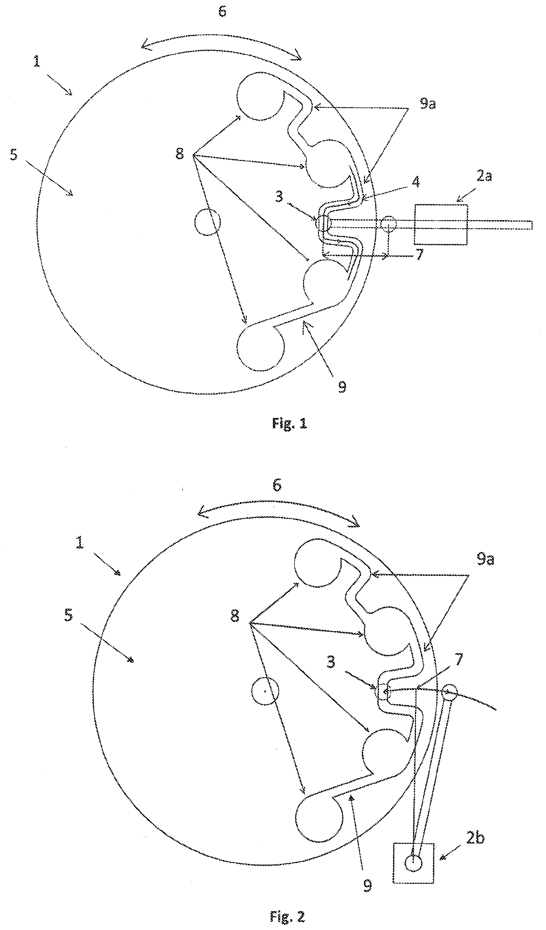

With reference to Figure 1, the apparatus 1 comprises a linear actuator 2a, having a magnet 3 mounted thereupon, wherein the magnet may be made to traverse a path 4 which may extend across a surface of a microfluidic disc 5, which may be mounted on the apparatus. The apparatus 1 further comprises a controller for controlling the rotation of the assay disc 5, with disc rotation shown by arrow 6, and movement of the magnet 3, as depicted by arrow 7, enabling the magnet 3 to traverse any desired path across the surface of the microfluidic system.

The range of movement of the magnet 3 may be limited such that the magnet may only be positioned along a portion of the radius of a mounted microfluidic disc corresponding to regions where a microfluidic channel or chamber may be present. Alternatively, the range of movement of the magnet may extend across the entire radius of a mounted microfluidic disc.

In particular, the controller controls the rotation of the mounted assay disc 5 in a clockwise and/or anticlockwise direction, as required, while simultaneously controlling the movement of the linear actuator in order that the magnet may trace a path between chambers 8 via the channels 9. Magnetic beads housed within a chamber 8 or channel 9 are attracted to the localised magnetic field caused by the proximity of the magnet and are directed through the chambers and/or channels, mirroring the path of the magnet 3.

The channels may be angled such that they run parallel to the circumference of the assay disc, or are angled thereto. The channels may also comprise curves and bends 9a.

In an alternative embodiment, depicted in Figure 2, the magnet may be mounted on a rotary actuator 2b. The range of movement of the magnet 3 may be limited such that the magnet may only be positioned along an arc which is predominantly in line with at least a portion of the radius of the assay disc.

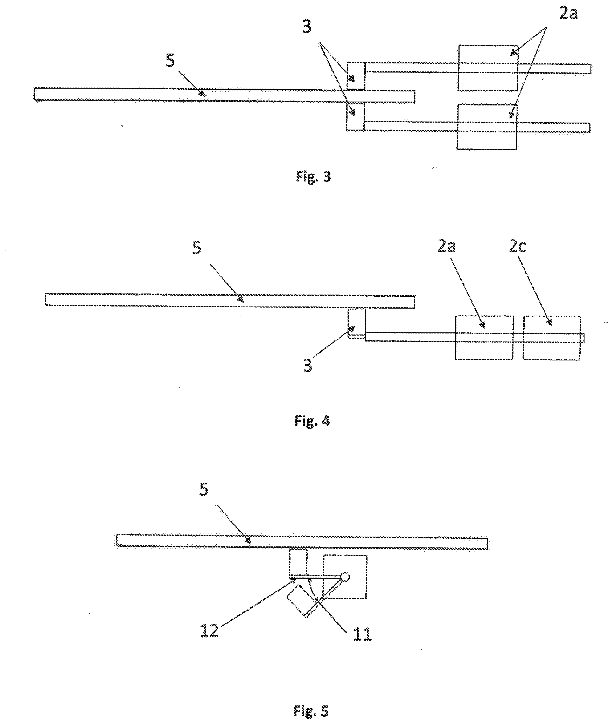

As depicted in Figure 3, in some embodiments, multiple magnets 3 may be mounted on actuators 2a which are positioned above and below a mounted assay disc. Alternatively, magnets may be positioned only above a mounted microfluidic disc, or only below mounted microfluidic disc.

As shown in Figures 4 and 5, in some embodiments a linear actuator 2a and rotary actuator 2c are mounted on a single driveshaft which positions the magnet beneath the assay disc. Alternatively, the magnet may be positioned above assay disc. Rotation of the rotary actuator 2c in one direction brings the magnet 3 into contact with the assay disc 5, while rotation of the rotary actuator 2c in the opposite direction moves the magnet away from the assay disc, as shown by rotation arrow 11.

The linear actuator 2a enables the magnet to be moved along a desired x-axis along the radius of a mounted microfluidic disc.

A leaf spring, 12, may apply a suitable force to keep the magnet 3 contact with the assay disc 5.

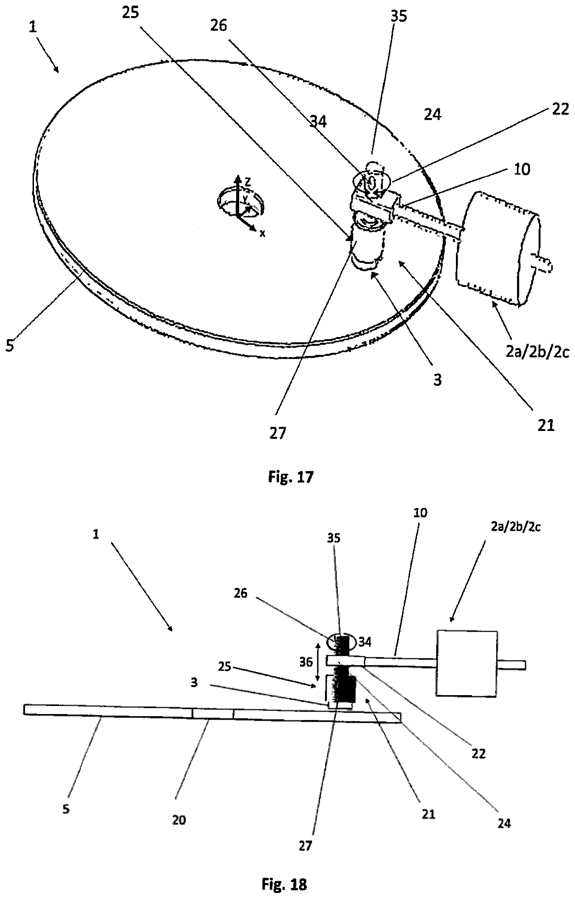

As shown in Figures 17 and 18 in some embodiments an adjustable mounting assembly may be used for mounting the magnet 3 and positioning the magnet in the Z-axis in relation to the assay disc 5. The adjustable mounting assembly may be used in combination with a leaf spring 12 as shown in Figure 5 or without a leaf spring. In certain embodiments the adjustable mount assembly may comprise a spring in order to provide a suitable force to keep the magnet 3 in contact with the assay disc 5.

The adjustable mounting assembly comprises a through plate 22 and a magnet holder 25. The through plate may be mounted onto the drive shaft of one or more linear 2a and/or rotary actuators 2b/2c. The through plate 22 may be located so as to be positioned above the assay disc 5. The through plate 22 comprises a first engagement portion 24 which is configured to engage with a second engagement portion 26 of the adjustable magnet holder 25. The adjustable magnet holder comprises a holding portion 27 where the magnet 3 is engaged and held in place.

The holding portion 27 may be a recess where the magnet 3 is inserted. The magnet 3 may be held in the holding portion 27 by magnetic force. In some embodiments the magnet 3 may be held in the holding portion 27 by one or more clips or engagement members. In some embodiments the holding portion may have the spring located above the magnet 3 within the recess so as to provide a suitable force to keep the magnet 3 in contact with the assay disc 5.

In some embodiments the first engagement portion 24 may be a threaded though hole and the second engagement 26 may be a correspondingly threaded protrusion, as shown in Figures 17 and 18 extending from the holding portion 27. In some embodiments, the first engagement 24 portion may comprise a female threaded through hole and the second engagement portion 26 may comprise a correspondingly male threaded portion. In some embodiments, the first engagement 24 portion may comprise a male threaded through hole and the second engagement portion 26 may comprise a correspondingly female threaded portion.

When the male treaded portion is inserted into the female threaded portion or vice versa, the threads engage with each other. This allows for the adjustable magnet holder 21 and the magnet 3 held therein to be maintained in a fixed position above the assay disc 5. The adjustable magnet holder comprises an actuator portion 35 that allows for the adjustable magnet holder 25 to be rotated as shown by arrow 34. Rotation may be clockwise or anti-clockwise and depending on the arrangement of the threaded portions allows the second engagement portion to travel in the Z-axis relative to the assay disc 5 along the first threaded portion 24 leading to movement of the magnet 3 according to arrow 36 as shown in Figure 18. This allows the adjustable magnet holder 25 and the magnet 3 held therein to be positioned at a location in the Z-axis above or below the assay plate and maintained in this position. The actuation portion may be a slot, grove or depression that is able to receive a corresponding protrusion for example a protrusion of a screwdriver, alien key, hex key or other actuating device.

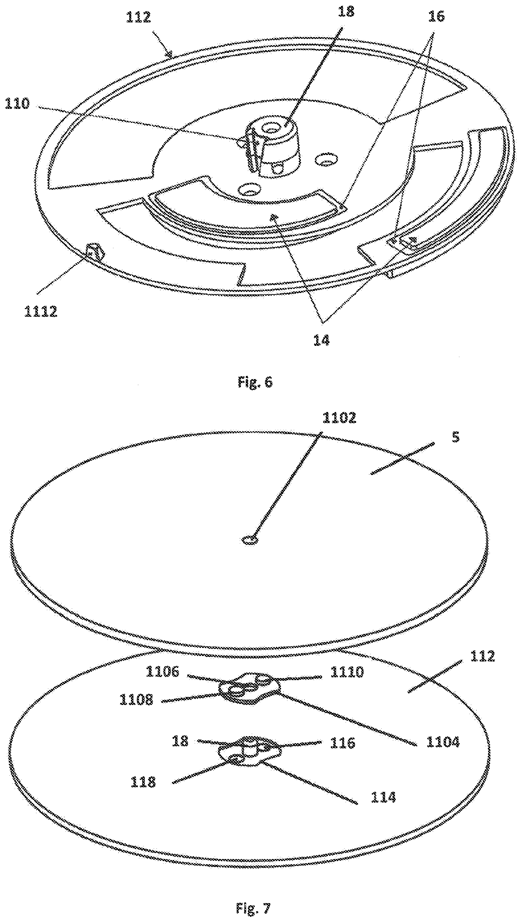

With reference to Figure 6, turntable platter 112 comprises heaters 14 and insulators 16. The insulators 16 are inserted in between the heaters 14 and the turntable and reduce the heat loss due to conduction. As a result, they improve heat efficiency and heat rate.

The turntable platter 112 comprises a central spindle 18 which itself comprises a longitudinal groove 110 which functions as an inner guide feature to allow coarse alignment of an assay disc 5 onto the spindle 18. Turntable platter 112 comprises boss 1112 which acts as a finer alignment feature.

The magnetic means of locating and securing the assay disc 5 to the turntable platter Z 112 are shown most clearly in Figure 7. Most of the features of the turntable platter 112 and the assay disc 5 are omitted from this Figure for clarity. Assay disc 5 comprises spindle hole 1102 for locating on spindle 18 of turntable platter 112. The turntable comprises disc magnet assembly 114 with north pole 116 and south pole 118. Assay disc 5 comprises corresponding disc magnetic assembly 1104 consists of a north pole disc magnet 1108 and a south pole disc magnet 1110, which for clarity is shown separate from assay disc 5 in Figure 7, though in use it is fixed to the assay disc 5, for example by using a neoprene sheet. The neoprene sheet may be pre-cut to a shape as shown in Figure 7 that only allows the assay disc 5 to be sited on the turntable in a specific orientation. The neoprene sheet also provides a frictional grip that prevents the assay disc 5 from skidding when it is spun to high speed.

The magnet assemblies 114 and 1104 are conveniently positioned at the hub of the apparatus, and accordingly in the embodiment shown, this magnet assembly 1104 has hole 1106 corresponding to spindle hole 1102 of the assay disc.

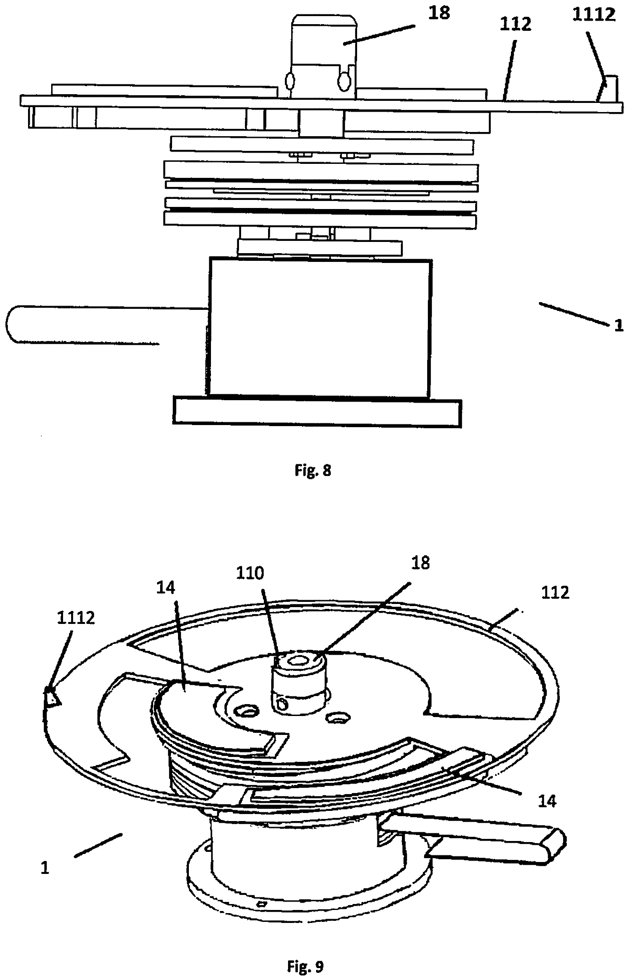

A side view and a perspective view of a turntable in accordance with the present invention are shown in Figures 8 and 9 respectively.

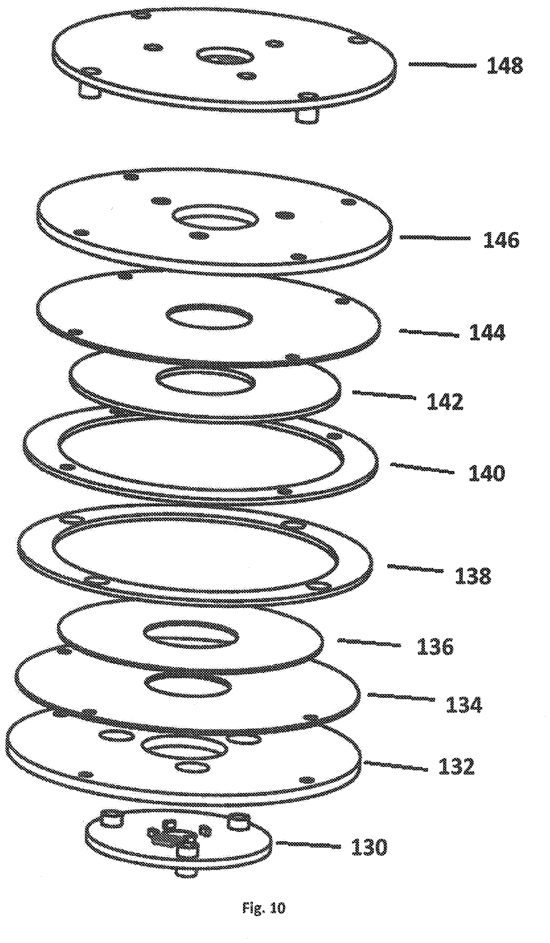

With reference to Figure 10, the turntable power transfer assembly may comprise stationary infrared transceiver 130, stationary coil lower holder 132, ferrite sheet 134, stationary coil 136, stationary coil upper holder 138, rotational coil lower holder 140, rotational coil 142, ferrite sheet 144, rotational coil upper holder 146 and assembly 148 comprising a heater controller and a rotational infrared transceiver. The lower and upper holders for both the stationary coil and the rotational coil act as clamps and may conveniently be made from plastic material.

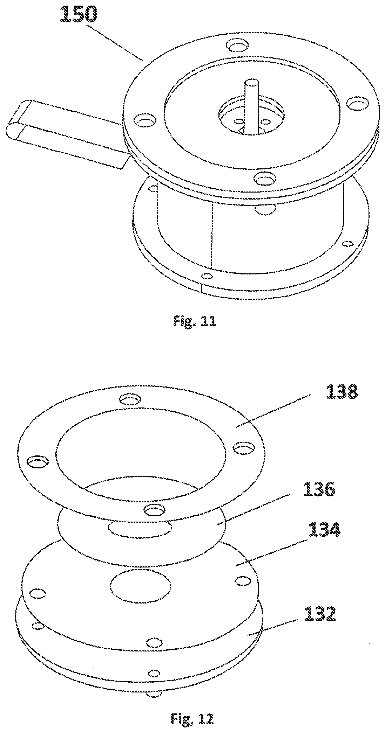

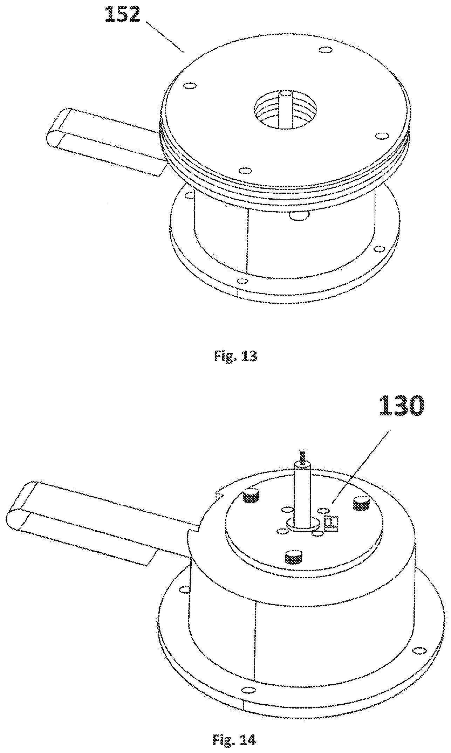

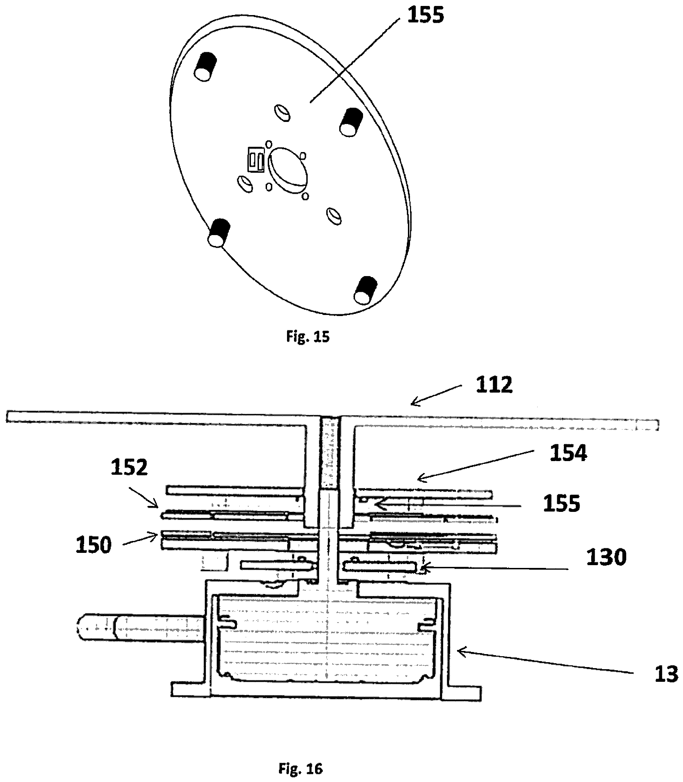

Some of the components of the turntable are shown in Figures 11 to 16. A schematic perspective view of the stationary coil assembly 150 is shown in exploded view in relation to some of the components in Figure 12, and Figure 13 shows the rotational coil assembly 152 positioned on top of the stationary coil assembly 150. IR transceiver stationary and rotational components 130, 155 are shown in Figures 14 and 15 respectively. A side view showing the full construction of a turntable assembly is shown in Figure 16. It starts with the BLDC motor mount component 13 as the base. The first component sitting on top of the BLDC mount is the stationary IR transceiver component 130. It is followed by the stationary coil component 150. Beneath turntable assembly component 112 are rotational IR transceiver component 155 and heater controller circuitry component 154. Components 155 and 154 share the same PCB board.

## Claims

1. An apparatus (1) for conducting an assay in a microfluidic system (5) comprising magnetic beads, said apparatus comprising:
a) a platform (112) upon which the microfluidic system can be mounted,
b) one or more actuators (2a, 2b, 2c);
c) wherein the one or more actuators comprise a magnet (3) mounted directly thereupon, or mounted on a spring, a spring assembly or an adjustable mounting assembly; wherein the one or more actuators comprises at least one rotary actuator (2b), wherein the at least one rotary actuator is configured to enable arcuate movement of the magnet in an X and Y axis of an x-y plane,
which is the high surface area plane of the mounted microfluidic system, wherein said one or more actuators is configured to directly influence movement of magnetic beads housed within the microfluidic system when the microfluidic system is mounted on said platform, and
d) a control means configured to control relative movement of the one or more actuators, and the microfluidic system when mounted, to enable the magnet to trace a desired path across the mounted microfluidic system,
said magnet being positionable at any x- and y-coordinates of the mounted microfluidic system, wherein said apparatus further comprises:
a means for moving the mounted microfluidic system in a stepwise fashion.

2. An apparatus according to Claim 1, wherein:
i) the apparatus further comprises a means for moving a mounted microfluidic system, the mounted microfluidic system is rotatable; optionally
ii) the stepwise motion of a mounted microfluidic system may be moveable by non-continuous rotation.

3. An apparatus according to any preceding Claim, wherein
i) the one or more actuators further comprise at least one linear actuator; and/or
ii) the one or more actuators further comprise at least one linear actuator (2a), and the rotary and linear actuators are on a single driveshaft; and/or
iii) the magnet is positionable above a mounted microfluidic system and/or a further magnet of a further one of the one or more actuators is positionable below a mounted microfluidic system, optionally wherein the apparatus comprises a means to move magnet clear of the microfluidic device, and further optionally wherein the means to move a magnet clear of the microfluidic device comprises a rotary actuator configured to allow rotation of the magnetic drive-shaft about an x-axis; and/or
iv) the magnet is configured to contact or be held at a fixed distance from the surface of a mounted microfluidic system.

4. An apparatus according to any one of Claims 1 to 3, wherein the magnet is mounted on
an adjustable mounting assembly, wherein the adjustable mounting assembly comprises an adjustable magnet holder (25) and a through plate (22) located on a portion of the rotary and/or linear actuator; optionally:
i) wherein the through plate comprises a first engagement portion; and
wherein the adjustable magnet holder comprises a second engagement portion configured to engage with the first engagement portion of the through plate; and/or
ii) wherein the first engagement portion (24) of the through plate comprises a threaded portion and the second engagement portion of the adjustable magnet holder comprises a corresponding threaded portion; and/or
iii) wherein the adjustable mounting assembly is configured to allow positioning of the magnet in a position along a Z-axis; and/or
iv) wherein the magnet is configured to be in contact with the surface of the microfluidic device.

5. An apparatus according to any preceding Claim, wherein the platform comprises a turntable configured to receive and controllably rotate an assay disc comprising a microfluidic system, optionally
i) wherein the control means controls one or more actuators and the turntable to enable the magnet to trace a desired path across a mounted microfluidic system; and/or
wherein the turntable comprises one or more heater modules (14) to apply heat to one or more specific parts of a mounted microfluidic system during rotation.

6. An apparatus according to Claim 5, wherein said turntable further comprises:
a heater controller to select a required heater and to control the temperature thereof, and
an IR transceiver (130, 155) to allow instructions and/or heating parameters to be transferred to the heater controller wirelessly.

7. An apparatus according to any of Claims 5 and 6, wherein said turntable further comprises a means to facilitate the correct positioning of the assay disc relative to the turntable, optionally wherein
i) said means comprise a central spindle (18) on the turntable corresponding to a spindle hole (1102) in the assay disc, and wherein said spindle has a longitudinal groove (110) to correspond with a longitudinal projection on the hub of the assay disc, optionally wherein the horizontal dimension of the groove of the spindle decreases in a longitudinally downward direction; or
ii) said means comprise a locating projection on the turntable to mate with a corresponding locating recess on an assay disc, optionally at, adjacent to, or near the periphery of the assay disc; or
iii) means of locating the assay disc relative to the turntable is as claimed in Claim 7, parts i)-ii); or
iv) the turntable comprises clamping means comprising magnetic means (114) for holding the assay disc in a fixed position relative to the turntable and/or for aligning and/or guiding the disc to the correct position, optionally wherein said magnetic means comprise disc magnets (1108, 1110) arranged in opposite pole directions in the turntable corresponding to disc magnets arranged in opposite pole directions in the assay disc.

8. An apparatus according to any of Claims 5 to 7, wherein:
i) said turntable further comprises clamping means to secure the assay disc to the turntable, optionally wherein said clamping means comprise a mechanical ball bearing clamping mechanism to hold the assay disc to the turntable; and/or
ii) wherein said turntable comprises a power transfer assembly comprising a wireless power transfer means (150) to transfer power to heater modules in the turntable and/or to the heater controller.

9. An apparatus according to Claim 6, wherein:
i) the IR transceiver comprises one or more IR emitters and one IR receiver, optionally wherein the IR transceiver comprises four IR emitters, and further optionally wherein the four emitters are arranged in equidistance surrounding the central hub of the turntable; and/or
ii) there are one or more heater modules, optionally
a. wherein the heater modules are independently controlled; and/or
b. wherein the power supplied to the heater can be shared and distributed among the heaters on demand.

10. An apparatus according to any of Claims 5 to 9, wherein the turntable comprises a power transfer assembly comprising a stationary coil (136) assembly and a rotational coil (142) assembly with the stationary coil assembly mounted axially coincident below.

11. Assay unit comprising an apparatus as claimed in any preceding Claim, further comprising means for heating and/or cooling the ambient temperature of the chamber within which the assay disc is located during the assay, and optionally wherein said means is a fan heater or cooler.

12. The combination of an apparatus as claimed in any of Claims 1 to 8 or an assay unit as claimed in Claim 11, and an assay disc comprising a microfluidic system comprising magnetic beads configured to be mounted on the apparatus.

13. Use of an apparatus of Claims 1-10 or an assay unit of Claim 11 or 12 to conduct an assay.

14. A method for carrying out an assay comprising the steps of:
i) mounting an assay disc comprising a microfluidic system (5) on a turntable (112), wherein said microfluidic system comprises a plurality of magnetic beads; and
ii) providing a magnet (3) on an actuator (2a, 2b, 2c) such that the magnet may be positioned at any x- and y-coordinates of an x-y plane, which is the high surface area plane of the microfluidic system of the mounted assay disc, further comprising the step of moving a plurality of magnetic beads through a portion of the microfluidic system (5) by moving said magnet whilst rotating said assay disc such that said magnet (3) traces a desired locus in the x-y plane of the assay disc.

## Patentansprüche

1. Vorrichtung (1) zum Durchführen eines Assays in einem mikrofluidischen System (5), das Magnetkügelchen umfasst, wobei die genannte Vorrichtung Folgendes umfasst:
a) eine Plattform (112), auf der das mikrofluidische System montiert werden kann,
b) einen oder mehrere Aktuatoren (2a, 2b, 2c);
c) wobei die ein oder mehreren Aktuatoren einen Magneten (3) umfassen, der direkt darauf oder auf einer Feder, einer Federanordnung oder einer justierbaren Montageanordnung montiert ist; wobei die ein oder mehreren Aktuatoren mindestens einen Drehaktuator (2b) umfassen, wobei der mindestens eine Drehaktuator zum Ermöglichen einer bogenförmigen Bewegung des Magneten in einer X- und Y-Achse einer X-Y-Ebene konfiguriert ist, die die Ebene mit der großen Oberfläche des montierten mikrofluidischen Systems ist, wobei die genannten ein oder mehreren Aktuatoren zum direkten Beeinflussen der Bewegung von in dem mikrofluidischen System untergebrachten Magnetkügelchen konfiguriert sind, wenn das mikrofluidische System auf der genannten Plattform montiert ist, und
d) ein Steuermittel, konfiguriert zum Steuern der relativen Bewegung der ein oder mehreren Aktuatoren und des mikrofluidischen Systems, wenn es montiert ist, um es dem Magneten zu ermöglichen, einen gewünschten Pfad über das montierte mikrofluidische System zu verfolgen, wobei der genannte Magnet an beliebigen x- und y-Koordinaten des montierten mikrofluidischen Systems positionierbar ist, wobei die genannte Vorrichtung ferner Folgendes umfasst:
ein Mittel zum schrittweisen Bewegen des montierten mikrofluidischen Systems.

2. Vorrichtung nach Anspruch 1, wobei:
i) die Vorrichtung ferner ein Mittel zum Bewegen eines montierten mikrofluidischen Systems umfasst, wobei das montierte mikrofluidische System drehbar ist; optional
ii) die schrittweise Bewegung eines montierten mikrofluidischen Systems durch nicht kontinuierliche Drehung bewegbar sein kann.

3. Vorrichtung nach einem vorherigen Anspruch, wobei
i) die ein oder mehreren Aktuatoren ferner mindestens einen Linearaktuator umfassen; und/oder
ii) die ein oder mehreren Aktuatoren ferner mindestens einen Linearaktuator (2a) umfassen und die Dreh- und Linearaktuatoren sich auf einer einzigen Antriebswelle befinden; und/oder
iii) der Magnet über einem montierten mikrofluidischen System positionierbar ist und/oder ein weiterer Magnet eines weiteren der ein oder mehreren Aktuatoren unterhalb eines montierten mikrofluidischen Systems positionierbar ist, wobei die Vorrichtung optional ein Mittel zum Wegbewegen des Magneten von der mikrofluidischen Vorrichtung umfasst, und wobei ferner optional das Mittel zum Wegbewegen eines Magneten von der mikrofluidischen Vorrichtung einen Drehaktuator umfasst, der zum Ermöglichen einer Drehung der magnetischen Antriebswelle um eine x-Achse konfiguriert ist; und/oder
iv) der Magnet konfiguriert ist, um die Oberfläche eines montierten mikrofluidischen Systems zu berühren oder um in einem festen Abstand von dieser gehalten zu werden.

4. Vorrichtung nach einem der Ansprüche 1 bis 3, wobei der Magnet auf einer justierbaren Montageanordnung montiert ist, wobei die justierbare Montageanordnung einen justierbaren Magnethalter (25) und eine auf einem Abschnitt des Dreh- und/oder Linearaktuators befindliche Durchgangsplatte (22) umfasst; wobei optional:
i) die Durchgangsplatte einen ersten Eingriffsabschnitt umfasst; und
wobei der justierbare Magnethalter einen zweiten Eingriffsabschnitt umfasst, der zum Ineingriffkommen mit dem ersten Eingriffsabschnitt der Durchgangsplatte konfiguriert ist; und/oder
ii) der erste Eingriffsabschnitt (24) der Durchgangsplatte einen Gewindeabschnitt umfasst und der zweite Eingriffsabschnitt des justierbaren Magnethalters einen entsprechenden Gewindeabschnitt umfasst; und/oder
iii) die justierbare Montageanordnung zum Ermöglichen der Positionierung des Magneten in einer Position entlang einer Z-Achse konfiguriert ist; und/oder
iv) der Magnet zum Kontaktieren der Oberfläche der mikrofluidischen Vorrichtung konfiguriert ist.

5. Vorrichtung nach einem vorherigen Anspruch, wobei die Plattform einen Drehtisch umfasst, der zum Aufnehmen und steuerbaren Drehen einer ein mikrofluidisches System umfassenden Assay-Scheibe konfiguriert ist, wobei optional
i) das Steuermittel einen oder mehrere Aktuatoren und den Drehtisch steuert, um es dem Magneten zu ermöglichen, einen gewünschten Pfad über ein montiertes mikrofluidisches System zu verfolgen; und/oder
wobei der Drehtisch ein oder mehrere Heizmodule (14) umfasst, um während der Drehung ein oder mehrere spezifische Teile eines montierten mikrofluidischen Systems mit Wärme zu beaufschlagen.

6. Vorrichtung nach Anspruch 5, wobei der genannte Drehtisch ferner Folgendes umfasst:
eine Heizungssteuerung zum Auswählen einer erforderlichen Heizung und zum Steuern der Temperatur derselben, und
einen IR-Transceiver (130, 155), um die drahtlose Übertragung von Befehlen und/oder Heizparametern zu der Heizungssteuerung zu ermöglichen.

7. Vorrichtung nach einem der Ansprüche 5 und 6, wobei der genannte Drehtisch ferner ein Mittel zum Erleichtern der korrekten Positionierung der Assay-Scheibe relativ zum Drehtisch umfasst, wobei optional
i) die genannten Mittel eine zentrale Spindel (18) auf dem Drehtisch entsprechend einem Spindelloch (1102) in der Assay-Scheibe umfassen, und wobei die genannte Spindel eine Längsnut (110) aufweist, die einem Längsvorsprung an der Nabe der Assay-Scheibe entspricht, wobei optional die horizontale Abmessung der Nut der Spindel in Längsrichtung nach unten abnimmt; oder
ii) die genannten Mittel einen Positionierungsvorsprung auf dem Drehtisch umfassen, der mit einer entsprechenden Positionierungsaussparung auf einer Assay-Scheibe optional an, neben oder nahe dem Umfang der Assay-Scheibe zusammenpasst; oder
iii) das Mittel zum Positionieren der Assay-Scheibe relativ zum Drehtisch wie in Anspruch 7, Teile i)-ii), beansprucht ist; oder
iv) der Drehtisch Klemmittel umfasst, die Magnetmittel (114) zum Halten der Assay-Scheibe in einer festen Position relativ zum Drehtisch und/oder zum Ausrichten und/oder Führen der Scheibe in die richtige Position umfassen, wobei die genannten Magnetmittel optional Scheibenmagnete (1108, 1110) umfassen, die in entgegengesetzten Polrichtungen im Drehtisch angeordnet sind, entsprechend den in entgegengesetzten Polrichtungen in der Assay-Scheibe angeordneten Scheibenmagneten.

8. Vorrichtung nach einem der Ansprüche 5 bis 7, wobei:
i) der genannte Drehtisch ferner Klemmmittel umfasst, um die Assay-Scheibe am Drehtisch zu befestigen, wobei die genannten Klemmmittel optional einen mechanischen Kugellager-Klemmmechanismus zum Halten der Assay-Scheibe am Drehtisch umfassen; und/oder
ii) wobei der genannte Drehtisch eine Kraftübertragungsanordnung umfasst, die ein drahtloses Kraftübertragungsmittel (150) umfasst, um Leistung zu Heizmodulen im Drehtisch und/oder zu der Heizungssteuerung zu übertragen.

9. Vorrichtung nach Anspruch 6, wobei:
i) der IR-Transceiver einen oder mehrere IR-Sender und einen IR-Empfänger umfasst, wobei der IR-Transceiver optional vier IR-Sender umfasst, und wobei ferner optional die vier Sender in gleichem Abstand um die zentralen Nabe des Drehtischs herum angeordnet sind; und/oder
ii) ein oder mehrere Heizmodule vorhanden sind, wobei optional
a. die Heizmodule unabhängig gesteuert werden; und/oder
b. die der Heizung zugeführte Leistung bei Bedarf gemeinsam genutzt und auf die Heizungen verteilt werden kann.

10. Vorrichtung nach einem der Ansprüche 5 bis 9, wobei der Drehtisch eine Kraftübertragungsanordnung umfasst, die eine Anordnung mit einer stationären Spule (136) und eine Anordnung mit einer rotierenden Spule (142) umfasst, wobei die Anordnung mit der stationären Spule axial übereinstimmend darunter montiert ist.

11. Assay-Einheit, die eine Vorrichtung nach einem vorherigen Anspruch umfasst, die ferner Mittel zum Erwärmen und/oder Kühlen der Umgebungstemperatur der Kammer umfasst, in der sich die Assay-Scheibe während des Assays befindet, und wobei das genannte Mittel optional ein Heizlüfter oder ein Kühler ist.

12. Kombination einer Vorrichtung nach einem der Ansprüche 1 bis 8 oder einer Assay-Einheit nach Anspruch 11 und einer Assay-Scheibe, die ein mikrofluidisches System mit zum Montieren an der Vorrichtung konfigurierten Magnetkügelchen umfasst.

13. Verwendung einer Vorrichtung nach den Ansprüchen 1-10 oder einer Assay-Einheit nach Anspruch 11 oder 12 zur Durchführung eines Assay.

14. Verfahren zur Durchführung eines Assays, das die folgenden Schritte beinhaltet:
i) Montieren einer ein mikrofluidisches System (5) umfassenden Assay-Scheibe auf einem Drehtisch (112), wobei das genannte mikrofluidische System mehrere Magnetkügelchen umfasst; und
ii) Bereitstellen eines Magneten (3) auf einem Aktuator (2a, 2b, 2c), so dass der Magnet an beliebigen x- und y-Koordinaten einer x-y-Ebene positioniert werden kann, die die Ebene mit der großen Oberfläche des mikrofluidischen Systems der montierten Assay-Scheibe ist, und das ferner den Schritt des Bewegens mehrerer Magnetkügelchen durch einen Teil des mikrofluidischen Systems (5) durch Bewegen des Magneten beinhaltet, während die Assay-Scheibe gedreht wird, so dass der genannte Magnet (3) eine gewünschte Ortskurve in der x-y-Ebene der Assay-Scheibe beschreibt.

## Revendications

1. Appareil (1) pour réaliser une analyse dans un système microfluidique (5) comprenant des billes magnétiques, ledit appareil comprenant :
a) une plate-forme (112) sur laquelle le système microfluidique peut être monté,
b) un ou plusieurs actionneurs (2a, 2b, 2c) ;
c) dans lequel les un ou plusieurs actionneurs comprennent un aimant (3) monté directement sur ceux-ci, ou monté sur un ressort, un ensemble de ressort ou un ensemble de montage réglable ; dans lequel les un ou plusieurs actionneurs comprennent au moins un actionneur rotatif (2b), dans lequel l'au moins un actionneur rotatif est configuré pour permettre un déplacement arqué de l'aimant dans un axe X et Y d'un plan x-y, lequel est le plan de surface supérieur du système microfluidique monté, dans lequel lesdits un ou plusieurs actionneurs sont configurés pour influencer directement le mouvement des billes magnétiques logées dans le système microfluidique lorsque le système microfluidique est monté sur ladite plate-forme, et
d) un moyen de commande configuré pour commander un déplacement relatif des un ou plusieurs actionneurs, et du système microfluidique lorsqu'il est monté, pour permettre à l'aimant de tracer un chemin souhaité en travers du système microfluidique monté,
ledit aimant pouvant être positionné à n'importe quelle coordonnée x et y du système microfluidique monté, ledit appareil comprenant en outre :
un moyen de déplacement pas à pas du système microfluidique monté.

2. Appareil selon la revendication 1, dans lequel :
i) l'appareil comprend en outre un moyen de déplacement d'un système microfluidique monté, le système microfluidique monté est rotatif ; éventuellement
ii) le déplacement pas à pas d'un système microfluidique monté peut être déplacé par une rotation non continue.

3. Appareil selon l'une quelconque des revendications précédentes, dans lequel
i) les un ou plusieurs actionneurs comprennent en outre au moins un actionneur linéaire ; et/ou
ii) les un ou plusieurs actionneurs comprennent en outre au moins un actionneur linéaire (2a), et les actionneurs rotatif et linéaire sont montés sur un même arbre de transmission ; et/ou
iii) l'aimant est positionnable au-dessus d'un système microfluidique monté et/ou un aimant supplémentaire d'un actionneur supplémentaire des un ou plusieurs actionneurs est positionnable en dessous d'un système microfluidique monté, éventuellement l'appareil comprenant un moyen de déplacement de l'aimant à l'écart du dispositif microfluidique, et éventuellement en outre dans lequel le moyen de déplacement d'un aimant à l'écart du dispositif microfluidique comprend un actionneur rotatif configuré pour permettre une rotation de l'arbre d'entraînement magnétique autour d'un axe x ; et/ou
iv) l'aimant est configuré pour venir en contact avec la surface d'un système microfluidique monté ou être maintenu à une distance fixe de celle-ci.

4. Appareil selon l'une quelconque des revendications 1 à 3, dans lequel l'aimant est monté sur un ensemble de montage réglable, dans lequel l'ensemble de montage réglable comprend un support d'aimant réglable (25) et une plaque traversante (22) située sur une partie de l'actionneur rotatif et/ou linéaire ; éventuellement :
i) dans lequel la plaque traversante comprend une première partie d'enclenchement ; et dans lequel le support d'aimant réglable comprend une seconde partie d'enclenchement configurée pour s'enclencher avec la première partie d'enclenchement de la plaque traversante ; et/ou
ii) dans lequel la première partie d'enclenchement (24) de la plaque traversante comprend une partie filetée et la seconde partie d'enclenchement du support d'aimant réglable comprend une partie filetée correspondante ; et/ou
iii) dans lequel l'ensemble de montage réglable est configuré pour permettre le positionnement de l'aimant dans une position le long d'un axe Z ; et/ou
iv) dans lequel l'aimant est configuré pour être en contact avec la surface du dispositif microfluidique.

5. Appareil selon l'une quelconque des revendications précédentes, dans lequel la plate-forme comprend une plaque tournante configurée pour recevoir et faire pivoter de manière contrôlée un disque d'analyse comprenant un système microfluidique, éventuellement
i) dans lequel le moyen de commande commande un ou plusieurs actionneurs et la plaque tournante pour permettre à l'aimant de tracer un chemin souhaité en travers d'un système microfluidique monté ; et/ou
dans lequel la plaque tournante comprend un ou plusieurs modules de chauffage (14) pour appliquer de la chaleur à une ou plusieurs parties spécifiques d'un système microfluidique monté durant la rotation.

6. Appareil selon la revendication 5, dans lequel ladite plaque tournante comprend en outre :
un contrôleur de réchauffeur pour sélectionner un réchauffeur requis et commander la température de celui-ci, et
un émetteur-récepteur IR (130, 155) pour permettre le transfert sans fil d'instructions et/ou de paramètres de chauffage au contrôleur de réchauffeur.

7. Appareil selon l'une quelconque des revendications 5 et 6, dans lequel ladite plaque tournante comprend en outre un moyen pour faciliter le positionnement correct du disque d'analyse par rapport à la plaque tournante, dans lequel éventuellement
i) ledit moyen comprend une broche centrale (18) sur la plaque tournante correspondant à un trou de broche (1102) dans le disque d'analyse, et dans lequel ladite broche présente une rainure longitudinale (110) destinée à correspondre avec une projection longitudinale sur le moyeu du disque d'analyse, dans lequel éventuellement la dimension horizontale de la rainure de la broche diminue dans une direction longitudinale vers le bas ; ou
ii) ledit moyen comprend une projection de positionnement sur la plaque tournante destinée à s'accoupler avec un évidement de positionnement correspondant sur un disque d'analyse, éventuellement au niveau, à côté ou près de la périphérie du disque d'analyse ; ou
iii) le moyen de positionnement du disque d'analyse par rapport à la plaque tournante est tel que revendiqué à la revendication 7, parties i)-ii) ; ou
iv) la table tournante comprend des moyens de serrage comprenant des moyens magnétiques (114) pour maintenir le disque d'analyse dans une position fixe par rapport à la plaque tournante et/ou pour aligner et/ou guider le disque dans la position correcte, éventuellement dans lequel lesdits moyens magnétiques comprennent des aimants de disque (1108, 1110) disposés dans des directions polaires opposées dans la plaque tournante correspondant à des aimants de disque disposés dans des directions polaires opposées dans le disque d'analyse.

8. Appareil selon l'une quelconque des revendications 5 à 7, dans lequel :
i) ladite plaque tournante comprend en outre des moyens de serrage pour fixer le disque d'analyse à la plaque tournante, éventuellement dans lequel lesdits moyens de serrage comprennent un mécanisme de serrage mécanique à roulement à billes pour maintenir le disque d'analyse contre la plaque tournante ; et/ou
ii) dans lequel ladite plaque tournante comprend un ensemble de transfert de puissance comprenant un moyen de transfert de puissance sans fil (150) pour transférer de la puissance à des modules de chauffage dans la plaque tournante et/ou au contrôleur de réchauffeur.

9. Appareil selon la revendication 6, dans lequel :
i) l'émetteur-récepteur IR comprend un ou plusieurs émetteurs IR et un récepteur IR, éventuellement dans lequel l'émetteur-récepteur IR comprend quatre émetteurs IR, et éventuellement en outre dans lequel les quatre émetteurs sont disposés à égale distance autour du moyeu central de la plaque tournante ; et/ou
ii) un ou plusieurs modules de chauffage sont fournis, éventuellement
a. dans lequel les modules de chauffage sont commandés indépendamment ; et/ou
b. dans lequel la puissance au réchauffeur peut être partagée et distribuée entre les réchauffeurs à la demande.

10. Appareil selon l'une quelconque des revendications 5 à 9, dans lequel la plaque tournante comprend un ensemble de transfert de puissance comprenant un ensemble de bobine fixe (136) et un ensemble de bobine rotatif (142) sous lequel est monté axialement et de manière coïncidente l'ensemble de bobine fixe.

11. Unité d'analyse comprenant un appareil selon l'une quelconque des revendications précédentes, comprenant en outre un moyen de chauffage et/ou de refroidissement de la température ambiante de la chambre à l'intérieur de laquelle se trouve le disque d'analyse pendant l'analyse, et éventuellement dans lequel ledit moyen est un radiateur soufflant ou un refroidisseur.

12. Combinaison d'un appareil selon l'une quelconque des revendications 1 à 8 ou d'une unité d'analyse selon la revendication 11, et d'un disque d'analyse comprenant un système microfluidique comprenant des billes magnétiques configuré pour être monté sur l'appareil.

13. Utilisation d'un appareil selon les revendications 1 à 10 ou d'une unité d'essai selon les revendications 11 ou 12 pour réaliser une analyse.

14. Procédé de réalisation d'une analyse comprenant les étapes suivantes :
i) le montage d'un disque d'analyse comprenant un système microfluidique (5) sur une plaque tournante (112), ledit système microfluidique comprenant une pluralité de billes magnétiques ; et
ii) la fourniture d'un aimant (3) sur un actionneur (2a, 2b, 2c) de telle sorte que l'aimant puisse être positionné à n'importe quelle coordonnée x et y d'un plan x-y, lequel est le plan de surface supérieur du système microfluidique du disque d'analyse monté, comprenant en outre l'étape de déplacement d'une pluralité de billes magnétiques à travers une partie du système microfluidique (5) en déplaçant ledit aimant tout en faisant tourner ledit disque d'analyse de telle sorte que ledit aimant (3) trace un locus souhaité dans le plan x-y du disque d'analyse.
